# EUROPÄISCHE PATENTSCHRIFT

(11) **EP 1 734 279 B1**
(45) Veröffentlichungstag und Bekanntmachung des Hinweises auf die Patenterteilung: **09.01.2008**
(21) Anmeldenummer: 06008161.9
(22) Anmeldetag: 20.04.2006
(51) Int. Cl.: F16F 15/16

(54) **Drehschwingungsdämpfer**
Torsional vibration damper
Amortisseur d'oscillations de torsion

(30) Priorität: 16.06.2005 DE 102005027834
(43) Veröffentlichungstag der Anmeldung: 20.12.2006
(73) Patentinhaber: MAN Nutzfahrzeuge Aktiengesellschaft, 80995 München (DE)
(72) Erfinder: Kampmann, Elmar-Jörg, 48308 Senden (DE)

(56) Entgegenhaltungen:
- DE-A1- 1 813 563
- DE-A1- 3 639 190
- DE-A1- 10 056 661
- DE-A1- 19 839 470
- DE-C- 588 245

## Beschreibung

Gegenstand der Erfindung ist ein Drehschwingungsdämpfer gemäß dem Gattungsbegriff des Patentanspruches 1.

Bei rotierenden Wellen z. B. bei Kurbelwellen von Brennkraftmaschinen treten häufig aufgrund von an der Welle angreifender Kräfte Torsionsschwingungen auf, die zu einer starken Beanspruchung der Welle führen und beim Zusammenfallen mit Resonanzen der Welle bis zu deren Bruch führen können. Um dem zu begegnen ist es üblich Drehschwingungsdämpfer vorzusehen, die durch Massenverlagerungen die Drehschwingungen dämpfen oder tilgen.
Man unterscheidet dabei zwei große Gruppen von Drehschwingungsdämpfern, einerseits sogenannte Resonanzdrehschwingungsdämpfer die bei bestimmten Drehzahlen auftretende Drehschwingungen durch elastische Werkstoffverformung im wesentlichen vollständig tilgen und andererseits drehzahlunabhängig wirkende Drehschwingungsdämpfer die auftretende Torsionsschwingungen durch mechanische oder fluidische Reibung abbremsen und dadurch dämpfen.

Resonanzdrehschwingungsdämpfer sind in vielfältigen Ausgestaltungen bekannt, ein typischer Vertreter dieser Bauart ist beispielsweise in der DE 588 245 beschrieben. Auf dem Außenumfang einer mit einer Kurbelwelle verbundenen Nabe ist konzentrisch ein Kautschukring angeordnet, der auf seinem Außenumfang einen konzentrischen die Schwungmasse bildenden Außenring trägt. Die Verbindung zwischen Nabe und Kautschukring einerseits und Kautschukring und Außenring andererseits ist durch Reibschluss hergestellt, kann aber auch durch andere Verbindungstechniken wie Anvulkanisieren oder Formschluss hergestellt sein. Wie bereits oben erwähnt, wird bei Drehschwingungsdämpfern dieses Typs die kinetische Energie bestimmter Torsionsschwingungen, auf die der Resonanzdrehschwingungsdämpfern abgestimmt ist, durch elastische Werkstoffverformung nahezu vollständig eliminiert, das bedeutet aber auch, dass Resonanzdrehschwingungsdämpfer bei anderen Drehzahlen als denen auf die sie abgestimmt sind, praktisch nicht wirksam werden. Ein weiteres Problem stellt die Abführung der durch die elastische Werkstoffverformung freiwerdenden Wärme dar.

Nach dem Prinzip der hydraulischen Dämpfung drehzahlunabhängig arbeitende Drehschwingungsdämpfer besitzen üblicherweise ein mit der zu bedämpfenden Welle fest verbundenes Primärteil und ein konzentrisch zu diesem angeordnetes die Schwungmasse bildendes um die gemeinsame Drehachse in einen bestimmten Drehwinkel bewegliches Sekundärteil. Zwischen Primärteil und Sekundärteil sind, konzentrisch zur Rotationsachse angeordnete, Verdrängungskammern ausgebildet, die über Drosselstellen miteinander in Verbindung stehen. Relativbewegungen zwischen Primärteil und Sekundärteil verändern das Volumen jeweils zweier über eine Drosselstelle verbundener Verdrängungskammern derart, dass das Volumen der einen um den gleichen Betrag abnimmt, um den das Volumen der anderen zunimmt. Die Verdrängungskammern sind mit einer Hydraulikflüssigkeit gefüllt, so dass bei einer Relativbewegung zwischen Primärteil und Sekundärteil, durch die damit verbundene Volumenänderung der Verdrängungskammern, Hydraulikflüssigkeit von der einen Verdrängungskammer über die Drosselstellen in die andere Verdrängungskammer überströmt. Durch die fluidische Reibung in der Drosselstelle wird dem System kinetische Energie durch Umwandlung in Wärme entzogen und so das System bedämpft.

Ein Drehschwingungsdämpfer bzw. eine drehelastische Kupplung der vorstehend beschriebenen Art ist beispielsweise der DE 198 39 470 A1 zu entnehmen. Dort sind zwischen Primärteil und Sekundärteil eingesetzte Federelemente zur Drehmomentübertragung vorgesehen. Den Verdrängungskammern ist dabei eine Flüssigkeitsversorgungseinrichtung mit einer Förderpumpe zugeordnet, mittels der über Versorgungskanäle Hydraulikflüssigkeit in die Verdrängungskammern gefördert wird. Die Rückführung der Hydraulikflüssigkeit erfolgt über Rücklaufkanäle in eine Rücklaufkammer. Der Zweck der Flüssigkeitsversorgungseinrichtung besteht dabei darin, die Verdrängungskammern zu entlüften und das vollständige Befüllen der Verdrängungskammern auch schon vor dem Start ohne Lufteinschlüsse sicherzustellen, so dass zum Startzeitpunkt die gesamte Dämpfungsleistung verfügbar ist.

Nachteilig bei den auf der Basis fluidischer Reibung funktionierenden Drehschwingungsdämpfern ist, dass sie bei besonders ausgeprägten Drehschwingungen mit großen Verschiebewinkeln, wie sie beim Durchfahren von Resonanzdrehzahlen der Welle auftreten, diese nur unbefriedigend bedämpfen können.

Ausgehend von den vorstehend beschriebenen Sachverhalten ist es Aufgabe der Erfindung, einen Drehschwingungsdämpfer zu schaffen, der einerseits über den gesamten Drehzahlbereich wirksam ist und andererseits Drehschwingungen mit besonders großen Verschiebewinkeln tilgt. In Weiterführung der Aufgabe soll der Drehschwingungsdämpfer dabei so beschaffen sein, dass die durch die Dämpfung frei werdende Wärme problemlos abgeführt werden kann und eine Anordnung an in Fahrzeugen betriebenen Brennkraftmaschinen bei geringem Platzbedarf möglich ist.

Gelöst wird die Aufgabe durch eine Anordnung nach dem Kennzeichen des Anspruches 1, vorteilhafte Ausgestaltungen sind in den Unteransprüchen gekennzeichnet.

Der erfindungsgemäße Drehschwingungsdämpfer besteht aus einem Resonanzdrehschwingungstilger und einem auf diesen gewissermaßen aufgesattelten, nach dem Prinzip der hydraulischen Dämpfung dehzahlunabhänig arbeitenden Drehschwingungsdämpfer und vereinigt so die Vorteile beider Dämpfer-Typen in einem Bauteil. Zudem beansprucht ein Drehschwingungsdämpfer gemäß der Erfindung nicht mehr Platz als ein konventioneller, nach einem der vorstehend angesprochen Prinzipien arbeitender Drehschwingungsdämpfer. Vorteilhaft ist weiter, dass im Resonanzfall am Resonanzdrehschwingungstilgerteil zwischen Nabe und Schwungmasse auftretende Bewegungen mit relativ großen Verschiebewinkel zusätzlich durch den hydraulisch wirkenden Dämpferteil bedämpft werden.

Durch eine permanente Zuführung der Hydraulikflüssigkeit unter Druck zu den Verdrängungskammern und ein Abfließen der überflüssigen Hydraulikflüssigkeit aus den Verdrängungskammern wird weiter in vorteilhafter Weise eine effiziente Wärmeabfuhr aus dem Drehschwingungsdämpfer möglich.

Eine vorteilhafte Optimierung der Anordnung ist dadurch gegeben, dass der Zustrom von der Nabe aus und der Ablauf in die Nabe zurück erfolgt, so wird der gesamte Drehschwingungsdämpfer, also auch der Resonanzdrehschwingungsdämpferteil von der Hydraulikflüssigkeit durchströmt und damit die Wärmeabfuhr erhöht.

Das Einströmen der Hydraulikflüssigkeit in den Drosselbereich zwischen zwei Verdrängungskammern sowie das Abführen der überschüssigen Hydraulikflüssigkeit aus dem Drosselbereich zwischen zwei Verdrängungskammern nützt in vorteilhafter Weise die an diesen Stellen günstigen Druckverhältnisse aus und bietet darüber hinaus den Vorteil, dass für je zwei Verdrängungskammern nur eine Zuströmöffnung und einen Abströmöffnung notwendig sind.

Durch die Anordnung von Zwischenstücken in Ausnehmungen des Primärteils wird ein einfacher und damit vorteilhafter Aufbau der Anordnung dadurch erreicht, dass eine Ausnehmung und ein Zwischenstück ohne zusätzlichen Aufwand zwei über Drosselspalte gekoppelte Verdrängungskammern ausbilden. Ergänzt wird die vorteilhafte Ausbildung dadurch, dass die Zwischenstücke über das Gehäuse in ihrer Lage relativ zum Primärteil und zueinander fixiert sind und zusammen mit dem Gehäuse das Sekundärteil bilden.

Eine besonders gleichmäßige und damit vorteilhafte Zuströmung der Hydraulikflüssigkeit ist dadurch gegeben, dass diese ausgehend von einem Verteilerraum in der Nabe sternförmig zu einem weitestmöglich von der Nabe entfernt liegenden Ringraum erfolgt und die Rückströmung ausgehend von den Verdrängungskammern sternförmig zu einem ringförmigen Ablaufkanal in der Nabe führt. Es ergeben sich so an vergleichbaren Punkten des Hydraulikkreislaufes gleiche Druckverhältnisse. Weiter bedingt die sternförmige Durchströmung der gesamten Anordnung eine gleichmäßige und damit vorteilhafte Wärmeabfuhr aus allen Teilen des Drehschwingungsdämpfers.

Die Ausbildung der ersten Bohrungen vom Ringraum zu den Verdrängungskammern als Stufendüsen verhindert durch die im jeweiligen Mündungsbereich der Stufendüse auftretenden Verwirbelungen in vorteilhafter Weise weitgehend einen Rückfluss der Hydraulikflüssigkeit in die Versorgungskanäle, so dass auf Rückschlagventile verzichtet werden kann.

Dadurch, dass das Verhältnis der Querschnittsflächen jeweils einer ersten Bohrung zur Querschnittsfläche jeweils eines äußeren Drosselspaltes, bzw. das Verhältnis der Querschnittsflächen jeweils einer zweiten Bohrung zur Querschnittsfläche jeweils eines inneren Drosselspaltes in einem Bereich zwischen 1: 8 und 1:12 liegt, wird in vorteilhafter Weise erreicht, dass bei Relativbewegungen zwischen Primärteil und Sekundärteil der Transport der Hydraulikflüssigkeit zum überwiegenden Teil über die Drosselspalte erfolgt, es wird also der Rückfluss von Hydraulikflüssigkeit in die Versorgungskanäle bzw. der Ausstoß in die Ablaufkanäle minimiert und die Dämpfung maximiert. Andererseits erlaubt die erwähnte Dimensionierung eine ausreichende und damit vorteilhafte Durchflussmenge an Hydraulikflüssigkeit zum Zwecke der Kühlung des Drehschwingungsdämpfers.

Von besonderem Vorteil ist weiterhin, dass bei erfindungsgemäßen Drehschwingungsdämpfern, die an Kurbelwellen von Brennkraftmaschinen eingesetzt werden, als Hydraulikflüssigkeit das Schmieröl aus den Schmierölkreislauf der Brennkraftmaschine Verwendung finden kann. Ein eigener Kreislauf für die Hydraulikflüssigkeit ist dann nicht notwendig. Die Zuführung der Hydraulikflüssigkeit über eine in der drehangetriebenen Welle angeordnete Bohrung minimiert den Aufwand in vorteilhafter Weise, insbesondere bei Brennkraftmaschinen kann der Anschluss an das ohnehin in der Kurbelwelle vorhandene System an Ölbohrungen durch eine einfache Anschlussbohrung erfolgen.

Ebenfalls von Vorteil ist die Abführung der Hydraulikflüssigkeit aus dem Drehschwingungsdämpfer über eine Bohrung in der drehangetriebenen Welle, z. B der Kurbelwelle bei einer Brennkraftmaschine. Dort kann das zurückfließende Schmieröl über die Kurbelwelle problemlos in die als Vorratsbehälter für das Schmieröl dienende Ölwanne eingeleitet werden.

Neben den vorstehend erwähnten Vorteilen ergeben sich weitere Vorteile und vorteilhafte Ausgestaltungen der Erfindung in Verbindung mit den Beispielen, die nachfolgend unter Zuhilfenahme der Zeichnungen näher beschrieben sind. Es zeigen:
- Fig. 1: Einen Schnitt durch einen erfindungsgemäßen Drehschwingungsdämpfer senkrecht zu seiner Rotationsachse
- Fig. 2: Einen Schnitt durch den Drehschwingungsdämpfer gemäß Fig. 1 entlang der Linie A - A
- Fig. 3: Einen Schnitt durch den Drehschwingungsdämpfer gemäß Fig. 1 entlang der Linie B - B

Zur Erläuterung des erfindungsgemäßen Drehschwingungsdämpfers wird nachfolgend von einem Resonanzdrehschwingungsdämpfer ausgegangen, dessen Schwungmasse so modifiziert ist, dass nicht nur in einem bestimmten Drehzahlbereich auftretende Schwingungen getilgt werden, sondern dass sich eine Dämpfung von Drehschwingungen über den gesamten Drehzahlbereich einstellt.

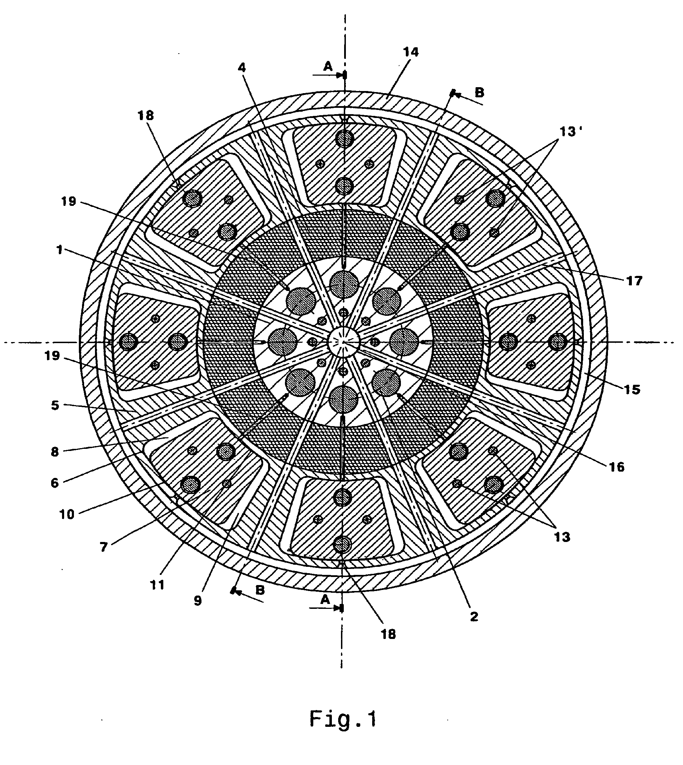

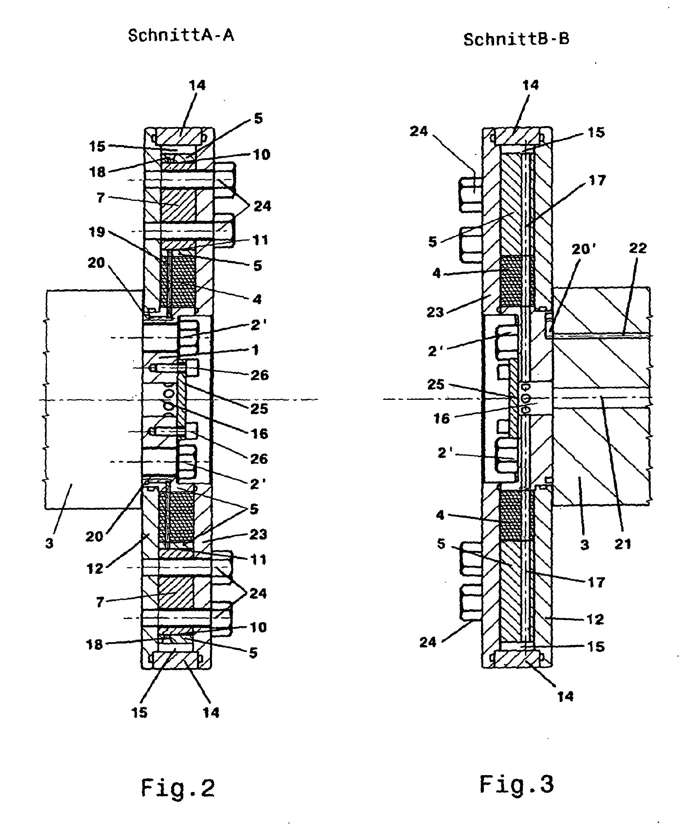

Fig. 1 zeigt in schematischer Darstellung einen Schnitt durch einen Drehschwingungsdämpfer senkrecht zu seiner Rotationsachse. Ausgehend von dieser Darstellung in Fig. 1 ist nachfolgend in Verbindung mit den Figuren 2 und 3, die einen Schnitt durch den Drehschwingungsdämpfer entlang der Linie A - A (Fig.2) bzw. einen Schnitt durch den Drehschwingungsdämpfer entlang der Linie B - B (Fig. 3) zeigen, eine Ausführung der Erfindung beispielhaft erörtert. Nachdem die Anordnung eine Vielzahl gleicher Bauteile umfasst, ist nur ein zum Verständnis notwendiger Teil mit Bezugszeichen versehen.

Auf einer Nabe 1, die über Schraubenlöcher 2 mittels entsprechender Schrauben 2' an einer drehangetriebenen Welle 3 (Fig. 3) befestigt ist, befindet sich, konzentrisch auf der Nabe 1 angeordnet und drehfest mit ihr verbunden, ein gummielastischer Ring 4. Der gummielastische Ring 4 wirkt mit der Nabe 1 und einer auf dem gummielastischen Ring 4 ebenfalls konzentrisch und drehfest angeordneten Schwungmasse zusammen, derart, dass bei einer bestimmt Drehzahl auftretende Dreh- oder Torsionsschwingungen durch elastische Verformung des gummielastischen Ringes 4 weitgehend eliminiert werden.

Die Schwungmasse ihrerseits besteht aus einer Reihe von Bauteilen, die einen nach dem Prinzip der hydraulischen Dämpfung arbeitenden Drehschwingungsdämpfer ausbilden. Dazu ist, konzentrisch und drehfest auf dem gummielastischen Ring 4 angeordnet, ein kreisringförmig ausgebildetes Primärteil 5 vorgesehen. Im Primärteil 5 befinden sich, konzentrisch zur Rotationsachse orientiert, Aussparungen 6, die im wesentlichen die Form von Kreisringsegmenten aufweisen. In den Aussparungen 6 wiederum sind Zwischenstücke 7 angeordnet, die ebenfalls im wesentlichen die Form von Kreisringsegmenten aufweisen, jedoch gegenüber den Aussparungen 6 kleiner ausgebildet sind. Die Abmessungen der Zwischenstücke 7 sind dabei so gewählt, dass diese zwischen ihrem Außenumfang und dem Innenumfang der Aussparungen 6 Paare von Verdrängungskammern 8, 9 ausbilden, die jeweils über einen äußeren Drosselspalt 10 und einen inneren Drosselspalt 11 miteinander in Verbindung stehen.

Die Zwischenstücke 7 sind zueinander und zum Primärteil 5 über einen ersten kreisringförmigen Gehäusedeckel 12 fixiert, der, wie in Fig. 2 besser erkennbar, mit seinem Innendurchmesser drehbar und flüssigkeitsdicht auf einem ringförmig umlaufenden Absatz der Nabe 1 gelagert ist. Die Fixierung erfolgt über am Gehäusedeckel 12 festgelegte Passstifte 13, die in entsprechende Ausnehmungen 13' in den Zwischenstücken 7 eingreifen. An dem ersten Gehäusedeckel 12 ist im Bereich seines Außenumfanges ein ringförmig umlaufender Absatz vorgesehen, an dem ein Außenring 14 konzentrisch zum Primärteil 5 flüssigkeitsdicht befestigt ist, derart, dass zwischen Primärteil 5 und Außenring 14 ein Ringraum 15 verbleibt.

Zur Verbindung des Ringraumes 15 mit einem im Zentrum der Nabe 1 angeordneten Verteilerraum 16 sind sternförmig verlaufende, das Primärteil, den gummielastischen Ring 4 und die Nabe 1 durchsetzende Verteilerbohrungen 17 vorgesehen.

Die Anbindung der Verdrängungskammern 8, 9 an den Ringraum 15 erfolgt über erste Bohrungen 18, die als Stufendüsen ausgebildet sind und vom Ringraum 15 ausgehend jeweils mittig im Bereich der äußeren Drosselspalte 10 in die Ausnehmungen 6 führen. Von den Ausnehmungen 6 ausgehend sind sternförmig angeordnete zweite Bohrungen 19 vorgesehen, die, jeweils von der Mitte der Ausnehmungen 6 im Bereich des inneren Drosselspaltes ausgehend, das Primärteil 6, den gummielastischen Ring 5 und Teile der Nabe 1 durchsetzen und in einen ringförmig in der Nabe 1 verlaufenden Ablaufkanal 20 münden.

Der in der Nabe 1 angeordnete Verteilerraum 16 steht über eine in der drehbaren Welle 3 vorgesehene Zuführungsbohrung 21 mit einer Förderpumpe für die Hydraulikflüssigkeit (nicht dargestellt) in Verbindung, eine ebenfalls in der drehbaren Welle 3 angeordnete Ablaufbohrung 22 verbindet über eine kurze in der Nabe 1 angeordnete Radialnut 20' den ringförmigen Ablaufkanal 20 mit einem Vorratsbehälter für die Hydraulikflüssigkeit (nicht dargestellt).

Verschlossen werden die die Hydraulikflüssigkeit führenden Bereiche des Drehschwingungsdämpfers durch einen zweiten kreisringförmig ausgebildeten Gehäusedeckel 23, dessen äußerer Durchmesser im wesentlichen dem des ersten Gehäusedeckels 12 entspricht und der ebenfalls einen im Bereich seines Außendurchmessers ringförmig umlaufenden Absatz aufweist auf dem der Außenring 14 flüssigkeitsdicht gelagert ist. Mit seinem Innendurchmesser lagert der zweite Gehäusedeckel 23 drehbar und ebenfalls flüssigkeitsdicht an einem zweiten ringförmig umlaufenden Absatz der Nabe 1, so dass sich ein den gummielastischen Ring 4 und das Primärteil 5 umschließendes flüssigkeitsdichtes Gehäuse ergibt. Wie bereits ausgeführt, sind die Zwischenstücke 7 an dem ersten Gehäusedeckel 12 über Passstifte 13 fixiert und damit gewissermaßen Teil des Gehäuses, um eine Drehbarkeit des Gehäuses und damit eine Relativbewegung der Zwischenstücke 7 zum Primärteil 5 sicherzustellen sind die Zwischenstücke 7 in Richtung der Drehachse des Drehschwingungsdämpfers gesehen geringfügig dicker ausgeführt als der gummielastische Ring 4 bzw. das Primärteil 5, so dass die Zwischenstücke 7, gewissermaßen als Abstandshalter, den minimalen Abstand zwischen dem ersten und dem zweiten Gehäusedeckel festlegen. Die Fixierung des Gehäuses erfolgt mittels Schrauben 24 die durch entsprechende Durchgangslöcher im zweiten Gehäusedeckel 23 und in den Zwischenstücken 7 in Gewindelöcher im ersten Gehäusedeckel 12 eingreifen und so die Gehäusedeckel über die Zwischenstücke 7 und den Außenring 14 gegeneinander verspannen.

Zum Verschließen des Verteilerraumes 16 an seinem der drehbaren Welle 3 abgewandten Ende ist ein kreisförmiger Deckel 25 vorgesehen, der mittels Schrauben 26 an der Nabe 1 befestigt ist und so den Verteilerraum 16 flüssigkeitsdicht verschließt.

Die vorstehend angesprochenen Abdichtungen lassen sich durch in kreisförmigen Nuten eingelegte O-Ringe erreichen, aber auch andere Methoden der Abdichtung sind einsetzbar. Dem Fachmann sind derartige Abdichtungen bekannt, eine eingehende Beschreibung erübrigt sich daher.

Zur Erläuterung der Funktionsweise der Anordnung ist angenommen, dass es sich bei der drehangetriebenen Welle 3 um die Kurbelwelle einer Brennkraftmaschine handelt, der Drehschwingungsdämpfer als an einer Brennkraftmaschine betrieben wird.

Mit dem Starten der Brennkraftmaschine baut diese in bekannter Weise mittels einer im Nebentrieb der Brennkraftmaschine angeordneten Ölpumpe den Öldruck für das Schmieröl auf, so dass Schmieröl über das in der Kurbelwelle vorhandene System an Schmierölbohrungen zu den zu schmierenden Lagerstellen der Kurbelwelle gelangt. Wie bereits ausgeführt, ist an dieses System an Schmierölbohrungen eine Zuführbohrung 21 angeschlossen über die das Schmieröl in den Verteilerraum 16 und von diesem aus über die Verteilerbohrungen 17 zum Ringraum 15 gelangt. Durch die zentrale Anbindung der Verteilerkanäle baut sich im Ringraum 15 und damit an allen ersten Bohrungen 18 die von diesem ausgehend in die Ausnehmungen 6 münden, ein gleichmäßiger Öldruck auf.

Über die ersten Bohrungen 18, die als Stufendüsen ausgebildet sind, wird das Schmieröl in die Ausnehmungen 6 gepresst. Die Wirkung der Stufendüsen ist dabei so dass es im Bereich der Mündung in die Ausnehmungen 6 zu starken Verwirbelungen kommt, die einen Rückstrom des Schmieröls auch bei kurzzeitigem Druckanstieg in diesen Bereichen weitgehend verhindern.

Die Verteilung des Schmieröls in den Ausnehmungen 6 erfolgt über die äußeren Drosselspalte 10, über die das Schmieröl in die Verdrängungskammern 8, 9 strömt. Dadurch, dass die ersten Bohrungen 18 mittig im Bereich der Drosselspalte 10 in die Ausnehmungen 6 münden, ergibt sich eine weitgehend gleichmäßige Verteilung des Schmieröls in den Verdrängungskammern 8, 9. Durch die ständige Nachförderung von Schmieröl wird der jeweils das Fassungsvermögen der Verdrängungskammern 8, 9 übersteigende Teil über die zweiten Bohrungen 19, die im Bereich der inneren Drosselspalte 11 ebenfalls mittig angeordnet sind, in den ringförmig in der Nabe 1 verlaufenden Ablaufkanal 20 gepresst und gelangt von diesem über die Radialnut 20' und die in der Kurbelwelle verlaufende Ablaufbohrung 22, in die Ölwanne der Brennkraftmaschine (nicht dargestellt).

Selbstverständlich kann, abweichend vom vorstehend beschriebenen Beispiel, der Rücklauf des Schmieröls in die Ölwanne auch über ein mit der Radialnut 20' in Wirkverbindung stehendes Kurbelwellenrad oder ein Distanzstück zwischen der Radialnut 20' und der Kurbelwelle erfolgen.

Auf die vorstehend beschriebene Weise füllt sich der im Drehschwingungsdämpfer vorgesehene Schmierölkreislauf vollständig mit dem als Hydraulikflüssigkeit wirkenden Schmieröl, so dass zwischen dem Primärteil 5 und dem im wesentlichen aus den Zwischenstücken 7, dem Gehäusedeckeln 12, 23 und dem Außenring 14 bestehenden Sekundärteil, eine hydraulische Kopplung einstellt.

Der so mit Schmieröl befüllte Drehschwingungsdämpfer ist durch die an der Welle 3 angreifenden Kräfte insbesondere durch die Kolben der Brennkraftmaschine einer ungleichmäßigen Drehbewegung unterworfen. Dabei stellt die Welle 3 mit den daran angekoppelten Massen wie z. B. Nebenaggregaten ein vielgliedriges schwingungsfähiges System dar, das durch die ungleichmäßig wirkenden Kräften zu Torsionsschwingungen angeregt wird. Die dabei auftretenden Schwingungsformen hängen von der Motorbauform und den Einflüssen des Gesamtsystems ab, dabei sind die auftretendenden Schwingungsformen mehr oder weniger stark ausgeprägt. Ein 6-Zylinder Reihenmotor kann beispielsweise ausgeprägte Schwingungen 6. Ordnung bei einer Drehzahl von 1900 U/min aufweisen, über den gesamten Drehzahlbereich verteilt können aber darüber hinaus weniger ausgeprägte Schwingungen unterschiedlicher Ordnung auftreten.

Um diesen Schwingungsverhältnissen zu begegnen weist die erfindungsgemäße Anordnung wie bereits erwähnt ein Resonanzdrehschwingungstilgerteil auf, das aus dem mit der Nabe 1 drehfest verbundenen gummielastischen Ring 4 und der Schwungmasse besteht, wobei sich die Schwungmasse im wesentlichen aus dem Primärteil 5, den Zwischenstücken 7 den Gehäusedeckeln 12, 23 und dem Außenring 14 zusammensetzt. Auf diesen Resonazdrehschwingungstilger ist ein nach dem Prinzip der hydraulischen Dämpfung wirkender Drehschwingungsdämpfer aufgesetzt der aus dem Primärteil 5 und dem Sekundärteil besteht, wobei das Sekundärteil im wesentlichen die Zwischenstücke 7 die Gehäusedeckel 12, 23 und den Außenring 14 umfasst. Diese Anordnung wirkt nun so, dass bei allen Drehzahlen der nach dem Prinzip der hydraulischen Dämpfung arbeitende Drehschwingungsdämpfer wirksam ist. Treten also Torsionsschwingungen auf, so wirken auf das Sekundärteil Beschleunigungskräfte wechselseitig in bzw. gegen die Drehrichtung. Das Sekundärteil versucht den durch die Beschleunigungsvorgänge initiierten Bewegungen zu folgen und wirkt dabei über die Zwischenstücke 7 wechselseitig druckerhöhend auf das in den Verdrängungskammern 8, 9 eingeschlossene Schmieröl. Dieser wechselseitige Druckunterschied ist bestrebt, sich durch die Drosselspalte 10, 11 auszugleichen und verdrängt dabei über diese Schmieröl wechselseitig von der einen Verdrängungskammer in die andere. Die Drosselspalte 10, 11 sind hinsichtlich ihrer Abmessungen und ihrer Oberflächenbeschaffenheit dabei so ausgebildet, dass ein möglichst großer Teil der durch die Beschleunigungsvorgänge in den Drehschwingungsdämpfer eingeleiteten Energie durch fluidische Reibung in den Drosselspalten 10,11 in Wärme umgesetzt wird. Dadurch, dass die Querschnittsfläche eines jeweils äußeren Drosselspaltes 10 wesentlich größer ist, als die Querschnittsfläche der jeweils zugehörigen ersten Bohrung 18 und diese zudem als Stufendüse ausgebildet ist und die Querschnittsfläche eines jeweils inneren Drosselspaltes 11 wesentlich größer ist, als die Querschnittsfläche der jeweils zugehörigen zweiten Bohrung 19, erfolgt der überwiegende Anteil des Transportes des Schmieröls zwischen den Verdrängungskammern 8, 9, lediglich ein kleiner Anteil des Schmieröls wird über die ersten und zweiten Bohrungen 18, 19 durch die Ausnehmungen 6 hindurch gefördert. Die Bohrungsdurchmesser der ersten und zweiten Bohrungen 18, 19 sind absolut gesehen so bemessen, dass die Durchflussmenge des Schmieröls ausreicht, die durch die Flüssigkeitsreibung in den Drosselspalten 10, 11 erzeugte Wärme abzuführen.

Im Unterschied zum vorstehend beschriebenen hydraulisch wirkenden Drehschwingungsdämpfer ist die Wirksamkeit des Resonanzdrehschwingungstilgers auf eine bestimmte Schwingungsform begrenzt. Die Abstimmung erfolgt dabei auf die Schwingungsform, bei der der größte Verschiebewinkel auftritt, also die Torsionsschwingung mit der größten Schwingungsamplitude. Gemäß dem oben herangezogenen Beispiel wäre dies eine Schwingung 6. Ordnung bei einer Drehzahl von 1900 U/min. Die Abstimmung des Resonanzdrehschwingungstilgers erfolgt dabei durch die Wahl des Materials aus dem der gummielastische Ring 4 gefertigt ist und die Abmessungen dieses Bauteils in Verbindung mit der Schwungmasse, in der Weise, dass beim Durchfahren des entsprechenden Drehzahlbereiches die auftretenden Torsionsschwingungen durch elastische Verformung des gummielastischen Ringes 4 im wesentlichen vollständig getilgt werden.

Mit der vorstehend beschriebenen Anordnung ist es möglich, eine drehangetriebene Welle hinsichtlich auftretender Torsionsschwingungen im gesamten Drehzahlbereich zu bedämpfen und die im Bereich der Resonanzdrehzahl auftretenden Drehschwingungen mit großem Verschiebewinkel gezielt zu tilgen. Die durch die Dämpfungs- bzw. Tilgungsvorgänge erzeugte Wärme lässt sich auf einfache Weise über die Hydraulikflüssigkeit, im Beispiel über das Schmieröl der Brennkraftmaschine abführen, das ohnehin durch entsprechende Kühlmaßnahmen z. B. über einen Ölkühler rückgekühlt wird.

Abweichend vom vorstehend beschriebenen Beispiel sind zahlreiche Abwandlungen und Ausgestaltungen denkbar, die vom grundlegenden Lösungsansatz ausgehend mit dem Fachmann zugänglichem Wissen ableitbar sind. Es wird deshalb nachfolgend nur stichpunktartig auf solche Alternativen und Ausgestaltungen eingegangen.

Bei bestimmten Anwendungen, kann auf einen Umlauf der Hydraulikflüssigkeit verzichtet werden. Das ist dann der Fall, wenn die durch die Flüssigkeitsreibung erzeugte Wärmemenge anderweitig, z. B. durch Kühlrippen oder ähnliche Kühlmaßnahmen, abgeführt werden kann. Wesentlich ist dabei, dass die die Hydraulikflüssigkeit führenden Bereiche hermetisch dicht verschlossen sind und eine die Eigenschaften, bzw. die Haltbarkeit der Hydraulikflüssigkeit verändernde Erwärmung nicht auftreten kann.

Hinsichtlich der Anbindung des gummielastischen Ringes 4 an die Nabe 1, bzw. der Schwungmasse an den gummielastischen Ring 4 sind neben formschlüssigen Verbindungen wie anvulkanisiere, kleben oder verzahnen auch reibschlüssige Verbindungen denkbar. Im Falle von reibschlüssigen Verbindungen ist beim vorliegen eines Hydraulikkreislaufs der Durchfluss der Hydraulikflüssigkeit durch den gummielastischen Ring z. B. durch umlaufende Kanäle sicherzustellen.

Zur automatischen Mittigstellung der Zwischenstücke 7 in den Ausnehmungen 6 können Federelemente vorgesehen sein, die sich am Primärteil 5 und an den Zwischenstücken 7 abstützen, so dass bereits zu Beginn der Drehbewegung der Welle 3 die gleichmäßig mit Hydraulikflüssigkeit gefüllten Verdrängungskammern 8, 9 wirksam werden.

Die Anbindung der Verdrängungskammern an die Versorgungskanäle bzw. die Ablaufkanäle für die Hydraulikflüssigkeit kann auch für jede Verdrängungskammer separat erfolgen, gleichfalls können die Drosselspalte durch andere das Überströmen von einer Verdrängungskammer zur anderen drosselnde Einrichtungen ersetzt sein. In den Fällen in denen die vorgesehenen als Stufendüsen ausgeführten ersten Bohrungen 18 in ihrer den Rückstrom in die Versorgungsleitungen hemmenden Wirkung nicht ausreichen, können auch den Rückstrom bei Druckanstieg unterbindende Rückschlagventile oder alternativ ein zentrales Rückschlagventil vorgesehen sein.

## Patentansprüche

1. Drehschwingungsdämpfer zur Dämpfung von Torsionsschwingungen einer drehangetriebenen Welle (3) mit einem die Schwungmasse darstellenden rotationssymetrischen Trägheitskörper, wobei der Trägheitskörper mittels eines gummielastischen Ringes (4) mit einer Nabe (1) verbunden ist, die ihrerseits koaxial zur Rotationsachse der Welle (3) drehfest mit dieser verbunden ist,
**dadurch gekennzeichnet, dass**
- der Trägheitskörper ein Primärteil (5) und ein zu diesem koaxial gelagertes, um einen Drehwinkel gegenüber diesem verdrehbares Sekundärteil umfasst,
- zwischen Primärteil (5) und Sekundärteil, jeweils gemeinsam von diesen gebildet, Verdrängungskammern (8, 9) ausgebildet sind, von denen wenigstens je zwei über wenigstens eine Drosselstelle (10, 11) miteinander in Verbindung stehen,
- Relativbewegungen zwischen Primärteil (5) und Sekundärteil das Volumen jeweils zweier über die wenigstens eine Drosselstelle (10,11) verbundener Verdrängungskammem (8, 9) derart verändern, dass das Volumen der einen Verdrängungskammer um den gleichen Betrag abnimmt, um den das Volumen der anderen zunimmt,
- die Verdrängungskammern (8, 9) mit einer Hydraulikflüssigkeit gefüllt sind, derart, dass sich eine Flüssigkeitskopplung zwischen Primärteil (5) und Sekundärteil ergibt und
- bei einer Relativbewegung zwischen Primärteil (5) und Sekundärteil, durch die damit verbundene Volumenänderung der Verdrängungskammern (8, 9), Hydraulikflüssigkeit von der einen Verdrängungskammer (8, 9) über die wenigstens eine Drosselstelle (10, 11) in die andere Verdrängungshammer (8, 9) überströmt.

2. Drehschwingungsdämpfer nach Anspruch 1, **dadurch gekennzeichnet, dass** die Verdrängungskammern (8, 9) über Zuführungen (15, 16, 17, 18) für die Hydraulikflüssigkeit und Abläufe (19, 20) für die Hydraulikflüssigkeit verfügen, wobei über die Zuführungen (15, 16, 17, 18) Hydraulikflüssigkeit aus einem Vorratsbehälter unter Druck ständig zugeführt wird und überschüssige Hydraulikflüssigkeit aus den Verdrängungskammern (8, 9) über die Abläufe (19, 20) in den Vorratsbehälter zurück strömt und wobei die Zuführungen (15, 16, 17, 18) zu den Verdrängungskammern (8, 9) und die Abläufe (19, 20) aus den Verdrängungskammern (8, 9) so ausgebildet sind, dass bei Relativbewegungen zwischen Primärteil (5) und Sekundärteil ein Überströmen der Hydraulikflüssigkeit zum überwiegenden Teil nur zwischen den über die wenigstens eine Drosselstelle (10, 11) verbundenen Verdrängungskammern (8, 9) erfolgt.

3. Drehschwingungsdämpfer nach Anspruch 2, **dadurch gekennzeichnet, dass** die Zuführung der Hydraulikflüssigkeit von der Nabe (1) aus über den gummielastischen Ring (4) und das Primärteil (5) zu den Verdrängungskammern (8, 9) erfolgt.

4. Drehschwingungsdämpfer nach Anspruch 2, **dadurch gekennzeichnet, dass** der Rückstrom der Hydraulikflüssigkeit von der Verdrängungskammer (8, 9) aus über das Primärteil (5) und den gummielastischen Ring (4) zur Nabe (1) erfolgt.

5. Drehschwingungsdämpfer nach Anspruch 2, **dadurch gekennzeichnet, dass** die Zuführung der Hydraulikflüssigkeit von der Nabe (1) aus über den gummielastischen Ring (4) und das Primärteil (5) zu den Drosselstellen (10) zwischen den Verdrängungskammern (8, 9) erfolgt.

6. Drehschwingungsdämpfer nach Anspruch 2, **dadurch gekennzeichnet, dass** der Rückstrom der Hydraulikflüssigkeit von den Drosselstellen (11) zwischen den Verdrängungskammern (8, 9) aus über das Primärteil (5) und den gummielastischen Ring (4) zur Nabe (1) erfolgt.

7. Drehschwingungsdämpfer nach einem der vorhergehenden Ansprüche, **dadurch gekennzeichnet, dass** der Trägheitskörper folgendes umfasst:
- einen konzentrisch auf dem gummielastischen Ring (4) angeordneten das Primärteil (5) bildenden starren Ring mit konzentrisch zur Rotationsachse des Drehschwingungsdämpfers angeordneten, im wesentlichen kreisringsegmentförmig ausgebildeten, zueinander gleichmäßig beabstandeten Ausnehmungen (6),
- in den Ausnehmungen (6) des Primärteils (5) angeordnete ebenfalls im wesentlichen kreisringsegmentförmig ausgebildete Zwischenstücke (7), wobei die Zwischenstücke (7) gegenüber den Ausnehmungen (6) kleiner ausgebildet sind, derart, dass sich zwischen dem Innenumfang einer Ausnehmung (6) und dem Außenumfang eines darin angeordneten Zwischenstückes (5) in Drehrichtung der Anordnung gesehen auf beiden Seiten des Zwischenstückes (5) je eine Verdrängungskammer (8, 9) ausbildet und in radialer Richtung gesehen, auf der Innenseite und der Außenseite des Zwischenstückes (7) ein innerer und ein äußerer die Verdrängungskammern (8, 9) verbindender Drosselspalt (10, 11) gegeben ist,
- einen ersten kreisringförmig ausgebildeten Gehäusedeckel (12) auf dessen Innenseite die Zwischenstücke (7) entsprechend ihre Orientierung in den Ausnehmungen (6) des Primärteils (5) festgelegt sind,
- einem zweiten kreisringförmigen ausgebildeten Gehäusedeckel (23) mit einem Außendurchmesser der im wesentlichen dem Außendurchmesser des ersten Gehäusedeckels (12) entspricht, wobei an den Außendurchmessern der Gehäusedeckel (12, 23) ein Außenring (14) angeordnet ist derart, dass dieser mit dem ersten und dem zweiten Gehäusedeckel (12, 23) ein im Querschnitt U-förmiges Gehäuse ausbildet, das das Primärteil (5) und den gummielastischen Ring (4) umgreift und auf der Nabe (1) drehbar und flüssigkeitsdicht gelagert ist,
- in die Verdrängungskammern (8, 9) eingefüllte Hydraulikflüssigkeit die diese vollständig ausfüllt.

8. Drehschwingungsdämpfer nach Anspruch 7, **dadurch gekennzeichnet, dass** der erste Gehäusedeckel (12) mit dem zweiten Gehäusedeckel (23) über die Zwischenstücke (7) verschraubt ist und der Außenring (14), über ringförmige Absätze an den Gehäusedeckeln (12, 23) zentriert, flüssigkeitsdicht zwischen den Gehäusedeckeln (12, 23) unter Klemmwirkung gehalten ist.

9. Drehschwingungsdämpfer nach Anspruch 7, **dadurch gekennzeichnet, dass**
- das im Querschnitt U-förmige Gehäuse zwischen der Innenseite des Außenrings (14) und dem Außendurchmesser des Primärteils (5) einen Ringraum (15) ausbildet,
- der Ringraum (15) über sternförmig zur Rotationsachse verlaufende, das Primärteil (5) und den gummielastischen Ring (4) durchsetzende Verteilerbohrungen (17) mit einem im Zentrum der Nabe (1) liegenden, von einer Pumpe mit Hydraulikflüssigkeit versorgten Verteilerraum (16) für die Hydraulikflüssigkeit verbunden ist,
- vom Ringraum (15) erste Bohrungen (18) zu den Ausnehmungen (6) im Primärteil (5) führen, derart, dass sie im Bereich des äußeren Drosselspaltes (10) in die Ausnehmungen (6) mündet,
- von den Ausnehmungen (6) im Bereich des inneren Drosselspaltes (11) zweite Bohrungen (19), sternförmig das Primärteil (5), den gummielastischen Ring (4) und Teile der Nabe (1) durchsetzend, zu einem ringförmig in der Nabe (1) verlaufenden Ablaufkanal (20) führen, der mit einem Vorratsbehälter für die Hydraulikflüssigkeit verbunden ist.

10. Drehschwingungsdämpfer nach Anspruch 9, **dadurch gekennzeichnet, dass** die ersten Bohrungen (18) so ausgestaltet sind, dass sie jeweils in Richtung auf die Ausnehmungen (6) wirkende Stufendüsen ausbilden.

11. Drehschwingungsdämpfer nach Anspruch 9, **dadurch gekennzeichnet, dass** die zweiten Bohrungen (19) im Bereich des inneren Drosselspaltes (11) eine trichterförmige Erweiterung aufweisen.

12. Drehschwingungsdämpfer nach Anspruch 9, **dadurch gekennzeichnet, dass** das Verhältnis der Querschnittsflächen jeweils einer ersten Bohrungen (18) zur Querschnittsfläche jeweils eines äußeren Drosselspaltes (10) in einem Bereich zwischen 1:8 und 1:12 liegt.

13. Drehschwingungsdämpfer nach Anspruch 9, **dadurch gekennzeichnet, dass** das Verhältnis der Querschnittsflächen jeweils einer zweiten Bohrungen (19) zur Querschnittsfläche jeweils eines inneren Drosselspaltes (11) in einem Bereich zwischen 1:8 und 1:12 liegt.

14. Drehschwingungsdämpfer nach einem der Ansprüche 2 bis 6 oder 9 bis 13, **dadurch gekennzeichnet, dass** die Hydraulikflüssigkeit aus dem Schmierölkreislauf einer Brennkraftmaschine stammendes Schmieröl ist.

15. Drehschwingungsdämpfer nach einem der Ansprüche 2 bis 6 oder 9 bis 14, **dadurch gekennzeichnet, dass** die Zuführung der Hydraulikflüssigkeit über wenigstens eine Bohrung in der drehangetriebenen Welle (3) zu der mit dieser verbundenen Nabe (1) des Drehschwingungsdämpfers erfolgt.

16. Drehschwingungsdämpfer nach einem der Ansprüche 2 bis 6 oder 9 bis 14, **dadurch gekennzeichnet, dass** die Abführung der Hydraulikflüssigkeit über wenigstens eine Bohrung in der drehangetriebenen Welle (3) aus der mit dieser verbundenen Nabe (1) des Drehschwingungsdämpfers erfolgt.

## Claims

1. A torsional vibration damper for damping torsional vibrations of a rotationally driven shaft (3), comprising a rotationally symmetrical inertial body representing the centrifugal mass, the inertial body being connected by means of an elastically resilient ring (4) to a hub (1) which for its part is connected coaxially to the axis of rotation of the shaft (3) to the said shaft so as to be rotationally fixed,
**characterised in that**
- the inertial body comprises a primary part (5) and a secondary part which is mounted coaxially in relation to the said primary part and is rotatable about an angle of rotation relative to the said primary part,
- displacement chambers (8, 9) are formed between the primary part (5) and the secondary part, each formed jointly by the said parts, of which at least two in each case are connected to one another via at least one restriction (10, 11),
- relative movements between the primary part (5) and the secondary part change the volume of each two displacement chambers (8, 9) connected via the at least one restriction (10, 11) in such a way that the volume of one displacement chamber decreases by the same amount by which the volume of the other one increases,
- the displacement chambers (8, 9) are filled with a hydraulic fluid, in such a way that a fluid coupling results between the primary part (5) and the secondary part, and
- upon a relative movement between the primary part (5) and the secondary part, as a result of the volume change of the displacement chambers (8, 9) associated therewith, hydraulic fluid flows from one displacement chamber (8, 9) via the at least one restriction (10, 11) over into the other displacement chamber (8, 9).

2. A torsional vibration damper according to Claim 1, **characterised in that** the displacement chambers (8, 9) have feeds (15, 16, 17, 18) for the hydraulic fluid and outlets (19, 20) for the hydraulic fluid, hydraulic fluid being continuously supplied under pressure via the feeds (15, 16, 17, 18) from a reservoir and excess hydraulic fluid flowing out of the displacement chambers (8, 9) via the outlets (19, 20) back into the reservoir, and the feeds (15, 16, 17, 18) to the displacement chambers (8, 9) and the outlets (19, 20) out of the displacement chambers (8, 9) being designed such that, upon relative movements between the primary part (5) and the secondary part, flowing of the hydraulic fluid predominantly takes place only between the displacement chambers (8, 9) connected via the at least one restriction (10, 11).

3. A torsional vibration damper according to Claim 2, **characterised in that** the supply of the hydraulic fluid takes place from the hub (1) via the elastically resilient ring (4) and the primary part (5) to the displacement chambers (8, 9).

4. A torsional vibration damper according to Claim 2, **characterised in that** the return flow of the hydraulic fluid takes place from the displacement chamber (8, 9) via the primary part (5) and the elastically resilient ring (4) to the hub (1).

5. A torsional vibration damper according to Claim 2, **characterised in that** the supply of the hydraulic fluid takes place from the hub (1) via the elastically resilient ring (4) and the primary part (5) to the restrictions (10) between the displacement chambers (8, 9).

6. A torsional vibration damper according to Claim 2, **characterised in that** the return flow of the hydraulic fluid takes place from the restrictions (11) between the displacement chambers (8, 9) via the primary part (5) and the elastically resilient ring (4) to the hub (1).

7. A torsional vibration damper according to one of the preceding claims, **characterised in that** the inertial body comprises the following:
- a rigid ring arranged concentrically on the elastically resilient ring (4) and forming the primary part (5), comprising recesses (6) which are arranged concentrically to the axis of rotation of the torsional vibration damper, are designed so as to be substantially circular ring segment-shaped, and are uniformly spaced relative to one another,
- intermediate pieces (7) which are arranged in the recesses (6) of the primary part (5) and are similarly designed so as to be substantially circular ring segment-shaped, the intermediate pieces (7) being designed so as to be smaller than the recesses (6), such that between the inner periphery of a recess (6) and the outer periphery of an intermediate piece (5) arranged therein, viewed in the direction of rotation of the arrangement, respective displacement chambers (8, 9) form on both sides of the intermediate piece (5), and, viewed in the radial direction, on the inner side and the outer side of the intermediate piece (7) there is an inner and an outer restriction gap (10, 11) connecting the displacement chambers (8, 9),
- a first housing cover (12) designed so as to be circular ring-shaped, on the inner side of which are fixed the intermediate pieces (7) in conformity with their orientation in the recesses (6) of the primary part (5),
- a second housing cover (23) designed so as to be circular ring-shaped, with an outside diameter which substantially corresponds to the outside diameter of the first housing cover (12), an outer ring (14) being arranged on the outside diameters of the housing covers (12, 23) in such a way that together with the first and the second housing cover (12, 23) the said outer ring forms a housing, U-shaped in cross-section, which extends around the primary part (5) and the elastically resilient ring (4) and is mounted on the hub (1) so as to be rotatable and fluid-tight,
- hydraulic fluid fed into the displacement chambers (8, 9), which fills up the said displacement chambers completely.

8. A torsional vibration damper according to Claim 7, **characterised in that** the first housing cover (12) is screwed together with second housing cover (23) via the intermediate pieces (7), and the outer ring (14), centred via annular shoulders on the housing covers (12, 23), is held fluid-tight between the housing covers (12, 23) under a clamping effect.

9. A torsional vibration damper according to Claim 7, **characterised in that**
- the housing which is U-shaped in cross-section forms an annular space (15) between the inner side of the outer ring (14) and the outside diameter of the primary part (5),
- the annular space (15) is connected via distribution bores (17), extending in a star shape relative to the axis of rotation and passing through the primary part (5) and the elastically resilient ring (4), to a distribution space (16) for the hydraulic fluid, which distribution space is located in the centre of the hub (1) and is supplied with hydraulic fluid by a pump,
- first bores (18) run from the annular space (15) to the recesses (6) in the primary part (5) in such a way that they open into the recesses (6) in the region of the outer restriction gap (10),
- second bores (19) run from the recesses (6) in the region of the inner restriction gap (11), the said second bores passing in a star shape through the primary part (5), the elastically resilient ring (4) and parts of the hub (1), to an outlet duct (20) extending annularly in the hub (1), which outlet duct is connected to a reservoir for the hydraulic fluid.

10. A torsional vibration damper according to Claim 9, **characterised in that** the first bores (18) are shaped such that they form respective step nozzles acting in the direction towards the recesses (6).

11. A torsional vibration damper according to Claim 9, **characterised in that** the second bores (19) have a funnel-shaped widened portion in the region of the inner restriction gap (11).

12. A torsional vibration damper according to Claim 9, **characterised in that** the ratio of the cross-sectional surfaces of each one of the first bores (18) to the cross-sectional surface of each one outer restriction gap (10) is within a range between 1:8 and 1:12.

13. A torsional vibration damper according to Claim 9, **characterised in that** the ratio of the cross-sectional surfaces of each one of the second bores (19) to the cross-sectional surface of each one inner restriction gap (11) is within a range between 1:8 and 1:12.

14. A torsional vibration damper according to one of Claims 2 to 6 or 9 to 13, **characterised in that** the hydraulic fluid is lubricating oil originating from the lubricating oil circulation of an internal combustion engine.

15. A torsional vibration damper according to one of Claims 2 to 6 or 9 to 14, **characterised in that** the supply of the hydraulic fluid takes place via at least one bore in the rotationally driven shaft (3) to the hub (1) of the torsional vibration damper connected to the said shaft.

16. A torsional vibration damper according to one of Claims 2 to 6 or 9 to 14, **characterised in that** the discharge of the hydraulic fluid takes place via at least one bore in the rotationally driven shaft (3) from the hub (1) of the torsional vibration damper connected to the said shaft.

## Revendications

1. Amortisseur d'oscillations de torsion pour amortir les oscillations de torsion d'un arbre (3) entraîné en rotation, comportant un organe d'inertie, symétrique en rotation, constituant la masse oscillante, l'organe d'inertie étant relié à un moyeu (1) par un anneau (4) élastique de type caoutchouc, lui-même relié solidairement en rotation, coaxialement à l'axe de rotation de l'arbre (3),
**caractérisé en ce que**
- l'organe d'inertie comprend une partie primaire (5) et une partie secondaire montée coaxialement à la partie primaire et pouvant tourner par rapport à celle-ci d'un certain angle de rotation,
- entre la partie primaire (5) et la partie secondaire on a des chambres de refoulement (8, 9) respectives formées en commun par celles-ci et dont au moins deux chambres sont reliées l'une à l'autre par au moins un point d'étranglement (10, 11),
- les mouvements relatifs entre la partie primaire (5) et la partie secondaire modifient le volume chaque fois de deux chambres de refoulement (8, 9) reliées par au moins un point d'étranglement (10, 11) de façon que le volume d'une chambre de refoulement diminue de la même valeur que le volume de l'autre chambre augmente,
- les chambres de refoulement (8, 9) sont emplies d'un liquide hydraulique pour avoir un couplage de liquide entre la partie primaire (5) et la partie secondaire et
- pour un mouvement relatif entre la partie primaire (5) et la partie secondaire, la variation de volume entraînée pour les chambres de refoulement (8, 9) fait passer du liquide hydraulique d'une chambre de refoulement (8, 9) dans l'autre chambre de refoulement (8, 9) en passant au moins par un point d'étranglement (10, 11).

2. Amortisseur d'oscillations de torsion selon la revendication 1,
**caractérisé en ce que**
les chambres de refoulement (8, 9) comportent des alimentations (15, 16, 17, 18) et des sorties (19, 20) pour le liquide hydraulique, fourni en permanence sous pression par les alimentations (15, 16, 17, 18) à partir d'un réservoir d'alimentation, et le liquide hydraulique en excédent revient des chambres de refoulement (8, 9) par les sorties (19, 20) dans le réservoir d'alimentation et
les alimentations (15, 16, 17, 18) et les sorties (19, 20) des chambres de refoulement (8, 9) sont réalisées pour que les mouvements relatifs entre la partie primaire (5) et la partie secondaire produisent un passage du liquide hydraulique principalement seulement entre les chambres de refoulement (8, 9) reliées par au moins un point d'étranglement (10, 11).

3. Amortisseur d'oscillations de torsion selon la revendication 2,
**caractérisé en ce que**
l'alimentation en liquide hydraulique se fait à partir du moyeu (1) à travers l'anneau (4) élastique comme du caoutchouc, et la partie primaire (5) vers les chambres de refoulement (8, 9).

4. Amortisseur d'oscillations de torsion selon la revendication 2,
**caractérisé en ce que**
le retour de liquide hydraulique des chambres de refoulement (8, 9) se fait par la partie primaire (5) et l'anneau élastique (4) vers le moyeu (1).

5. Amortisseur d'oscillations de torsion selon la revendication 2,
**caractérisé en ce que**
le retour de liquide hydraulique du moyeu (1) se fait en passant par l'anneau élastique (4) et la partie primaire (5) vers les points d'étranglement (10) entre les chambres de refoulement (8, 9).

6. Amortisseur d'oscillations de torsion selon la revendication 2,
**caractérisé en ce que**
le retour de liquide hydraulique de point d'étranglement (11) entre les chambres de refoulement (8, 9) se fait par la partie primaire (5) et l'anneau élastique (4) vers le moyeu (1).

7. Amortisseur d'oscillations de torsion selon l'une des revendications précédentes,
**caractérisé en ce que**
l'organe d'inertie comprend les éléments suivants :
- un anneau rigide concentrique à l'anneau (4) élastique comme du caoutchouc formant la partie primaire (5) avec des cavités (6) réparties concentriquement à l'axe de rotation de l'amortisseur d'oscillations de torsion, réalisées principalement en forme de segments d'anneau de cercle et qui sont écartées régulièrement,
- les cavités (6) de la partie primaire (5) comportent des pièces intermédiaires (7) également réalisées pratiquement comme des segments d'anneaux de cercle, les pièces intermédiaires (7) étant plus petites que les cavités (6) de façon qu'entre la périphérie intérieure d'une cavité (6) et la périphérie extérieure d'une pièce intermédiaire (5) placée dans celle-ci, lorsqu'on regarde dans le sens de rotation du dispositif, sur les deux côtés de la pièce intermédiaire (5) on a chaque fois une chambre de refoulement (8, 9) et vu dans la direction radiale, du côté intérieur et du côté extérieur de la pièce intermédiaire (7), on a un intervalle d'étranglement (10, 11) intérieur et extérieur reliant les chambres de refoulement (8, 9),
- un premier couvercle de boîtier (12) de forme annulaire et sur son côté intérieur sont fixées les pièces intermédiaires (7), selon leur orientation dans les cavités (6) de la partie primaire (5),
- dans un second couvercle de boîtier (23) en forme d'anneau de cercle, dont le diamètre extérieur correspondant pratiquement au diamètre extérieur du premier couvercle de boîtier (12), les diamètres extérieurs des couvercles de boîtier (12, 23) portant un anneau extérieur (14) qui forme avec le premier et le second couvercle de boîtier (12, 23), un boîtier à section en forme de U, que la partie primaire (5) et l'anneau élastique (4) entourent en étant fixé sur le moyeu (1) de manière libre en rotation et étanche aux liquides,
- les chambres de refoulement (8, 9) sont remplies complètement de liquide hydraulique.

8. Amortisseur d'oscillations de torsion selon la revendication 7,
**caractérisé en ce que**
le premier couvercle de boîtier (12) est vissé au second couvercle de boîtier (23) par une pièce intermédiaire (7) et l'anneau extérieur (14) est centré par des prolongements de forme annulaire contre les couvercles (12, 23) du boîtier, en étant tenu par pincement de manière étanche au liquide entre les couvercles de boîtier (12, 23).

9. Amortisseur d'oscillations de torsion selon la revendication 7,
**caractérisé en ce qu'**
- un volume annulaire (15) est réalisé dans le boîtier à section en forme de U, entre le côté intérieur de l'anneau extérieur (14) et le diamètre extérieur de la partie primaire (5),
- le volume annulaire (15) est relié par des perçages de distribution (17) répartis en étoile par rapport à l'axe de rotation, traversant la partie primaire (5) et l'anneau élastique (4), à une chambre de distribution (16) prévue au milieu du moyeu (1), en étant alimentée en liquide hydraulique par une pompe, cette chambre de distribution (16) étant pour le liquide hydraulique,
- des premiers perçages (18) relient la chambre annulaire (15) aux cavités (6) dans la partie primaire (5) de façon à déboucher dans les cavités (6) dans la zone de l'intervalle d'étranglement extérieur (10),
- au niveau de l'intervalle d'étranglement intérieur (11), des seconds perçages (19) partent des cavités (6), ces perçages étant répartis en étoiles dans la partie primaire (5) pour traverser l'anneau élastique (4) et des parties du moyeu (1) pour conduire à un canal de sortie (20) en forme d'anneau dans le moyeu (1), ce canal de sortie étant relié au réservoir d'alimentation de liquide hydraulique.

10. Amortisseur d'oscillations de torsion selon la revendication 9,
**caractérisé en ce que**
les premiers perçages (18) sont réalisés pour former des buses étagées chacune en direction des cavités (6).

11. Amortisseur d'oscillations de torsion selon la revendication 9,
**caractérisé en ce que**
les seconds perçages (19) ont une extension en forme d'entonnoir au niveau de l'intervalle d'étranglement intérieur (11).

12. Amortisseur d'oscillations de torsion selon la revendication 9,
**caractérisé en ce que**
le rapport des surfaces de section de chaque fois un des premiers perçages (18) à la surface de la section de chaque fois un intervalle d'étranglement extérieur (10) se situe dans une plage comprise entre 1/8 et 1/12.

13. Amortisseur d'oscillations de torsion selon la revendication 9,
**caractérisé en ce que**
le rapport des surfaces de section de chaque fois un second perçage (19) à la section de la surface frontale d'un intervalle d'étranglement intérieur (11) se situe dans une plage comprise entre 1/8 et 1/12.

14. Amortisseur d'oscillations de torsion selon les revendications 2 à 6 ou 9 à 13,
**caractérisé en ce que**
le liquide hydraulique est de l'huile de graissage venant du circuit de graissage du moteur à combustion interne.

15. Amortisseur d'oscillations de torsion selon l'une des revendications 2 à 6 ou 9 à 14,
**caractérisé en ce que**
l'alimentation en liquide hydraulique se fait par l'intermédiaire d'au moins un perçage dans l'arbre (3) entraîné en rotation, vers le moyeu (1) de l'amortisseur d'oscillations de torsion relié à cet arbre.

16. Amortisseur d'oscillations de torsion selon l'une des revendications 2 à 6 ou 9 à 14,
**caractérisé en ce que**
l'évacuation du liquide hydraulique se fait par l'intermédiaire d'au moins un perçage dans l'arbre (3) entraîné en rotation, à partir du moyeu (1) de l'amortisseur d'oscillation de rotation relié à cet arbre.
